# FASCICULE DE BREVET EUROPEEN

(11) **EP 1 541 408 B1**
(45) Date de publication et mention de la délivrance du brevet: **20.09.2006**
(21) Numéro de dépôt: 04300847.3
(22) Date de dépôt: 06.12.2004
(51) Int. Cl.: B60N 2/30, B60N 2/28, B60N 2/46

(54) **Siège de véhicule comportant un coussin pivotant susceptible de constituer un élément d'appui ou de retenue**
Fahrzeugsitz mit einem schwenkbaren Kissen, welches zur Herstellung eines Stütz- oder Halteelementes geeignet ist.
Vehicle seat with a tiltable cushion able to constitute a supporting or retaining element.

(30) Priorité: 12.12.2003 FR 0314632
(43) Date de publication de la demande: 15.06.2005
(73) Titulaire: Renault s.a.s., 92100 Boulogne Billancourt (FR)
(72) Inventeur: MITU, Aurel, 95000, CERGY (FR)

(56) Documents cités:
- FR-A- 2 711 589
- FR-A- 2 726 517
- PATENT ABSTRACTS OF JAPAN vol. 1999, no. 09, 30 juillet 1999 (1999-07-30) -& JP 11 099863 A (NANBA PRESS KOGYO KK), 13 avril 1999 (1999-04-13)
- PATENT ABSTRACTS OF JAPAN vol. 0124, no. 16 (M-759), 4 novembre 1988 (1988-11-04) & JP 63 151552 A (TOKYO SEAT KK), 24 juin 1988 (1988-06-24)

## Description

La présente invention concerne un siège de véhicule automobile.

La présente invention concerne plus particulièrement un siège de véhicule automobile comportant un élément de dossier et un élément d'assise, du type dans lequel l'élément d'assise comporte un coussin principal qui est sensiblement adjacent à l'élément de dossier et un coussin mobile qui est monté pivotant par rapport au coussin principal, autour d'un axe principal transversal, entre une position, dite adulte, dans laquelle le siège est apte à recevoir un passager adulte et une position, dite enfant, dans laquelle le siège est apte à recevoir un passager enfant, du type dans lequel le coussin mobile comporte une portion avant, dite nez d'assise, qui, en position adulte, est sensiblement adjacente à la face avant du coussin principal et constitue une portion avant de la surface d'assise de l'élément d'assise et qui, en position enfant, est éloignée de la face avant du coussin principal, de manière à provoquer un raccourcissement de la longueur de la surface d'assise.

Un tel type de siège est connu notamment du document JP-A-63.151.552 qui décrit un siège dans lequel le nez d'assise pivote pour venir se placer sur le coussin principal, en position enfant.

Dans ce document, le siège comporte en outre deux accoudoirs qui sont montés pivotants sur l'élément de dossier du siège et qui sont reçus dans des logements complémentaires de l'élément de dossier, en position adulte.

Ce siège n'est pas complètement satisfaisant car, en position enfant, il ne prévoit pas de moyens de retenue longitudinale,

De plus, ce siège nécessite de réaliser un élément de dossier spécifique comportant des accoudoirs pivotants et des logements complémentaires des accoudoirs.

L'invention vise à remédier à ces inconvénients en proposant une solution simple, économique, et efficace.

Dans ce but, l'invention propose un siège du type décrit précédemment, caractérisé en ce que le nez d'assise est relié à l'axe principal de pivotement par l'intermédiaire d'au moins un bras latéral qui, en position adulte, forme une partie latérale, sensiblement longitudinale, de l'élément d'assise, et en ce que, en position enfant, le nez d'assise occupe une position escamotée dans laquelle le bras latéral s'étend globalement au-dessus du niveau du coussin principal, de manière à constituer un élément de retenue ou d'appui du passager enfant.

Selon des modes de réalisation de l'invention :
- en position enfant, le nez d'assise est susceptible d'occuper une position d'arceau de sécurité dans laquelle le nez d'assise s'étend globalement au-dessus du coussin principal et en avant de l'élément de dossier, de manière à constituer un élément de retenue longitudinale du passager enfant ;
- chaque extrémité transversale du nez d'assise est reliée à l'axe principal de pivotement par un bras latéral de manière que, en position d'arceau de sécurité, le nez d'assise et les deux bras latéraux constituent un arceau de sécurité fermé en forme de U ;
- le nez d'assise est réalisé en deux tronçons transversaux qui sont susceptibles de se désolidariser l'un de l'autre, et chaque tronçon transversal du nez d'assise est monté à pivotement par rapport au bras latéral associé, autour d'un axe secondaire sensiblement orthogonal à l'axe principal de pivotement ;
- en position enfant, chaque tronçon transversal est susceptible d'occuper, autour de l'axe secondaire, une position angulaire sensiblement longitudinale d'accoudoir dans laquelle le tronçon et le bras latéral associé sont contenus globalement dans un plan perpendiculaire à l'axe principal de pivotement ;
- chaque tronçon transversal est susceptible d'occuper, autour de l'axe secondaire, une position angulaire sensiblement verticale de support dans laquelle le tronçon et le bras latéral associé sont contenus globalement dans un plan perpendiculaire à l'axe principal de pivotement et dans laquelle les tronçons transversaux constituent deux pieds de support pour un élément rapporté tel qu'une tablette ;
- chaque tronçon transversal du nez d'assise est monté pivotant à l'extrémité fibre du bras latéral associé opposée à l'axe principal de pivotement ;
- les extrémités transversales en vis-à-vis des tronçons transversaux du nez d'assise comportent des moyens d'emboîtement complémentaires pour solidariser les tronçons transversaux ;
- l'axe principal de pivotement est agencé au voisinage de l'élément de dossier ;
- la face avant du coussin principal est constituée par une surface transversale qui est incimée par rapport à un plan horizontal et qui est orientée globalement vers l'avant et vers le haut, et le nez d'assise comporte une face, dite d'appui, qui, en position adulte, est sensiblement complémentaire de la face avant du coussin principal et qui est adjacente à la face avant du coussin principal ;
- au moins un bras latéral est muni de moyens pour le guidage de la sangle ventrale appartenant à une ceinture de sécurité équipant le siège.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un siège de véhicule réalisé conformément aux enseignements de l'invention et comportant un coussin mobile en position adulte ;
- la figure 2 est une vue en coupe partielle qui représente le siège de la figure 1 ;
- la figure 3 est une vue similaire à celle de la figure 1 qui représente le siège lorsque le coussin mobile occupe sa position enfant et une position d'arceau de sécurité ;
- la figure 4 est une vue similaire à celle de la figure 1 qui représente le siège lorsque le coussin mobile occupe sa position enfant et une position d'accoudoir.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

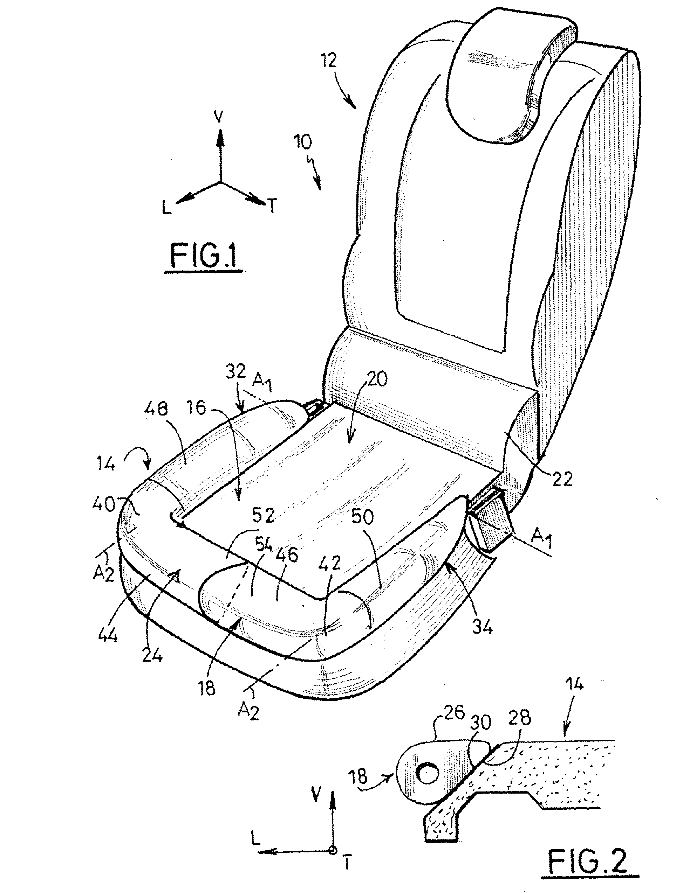

Sur les figures 1 à 4, on a représenté un siège 10 de véhicule automobile qui est réalisé conformément aux enseignements de l'invention.

Dans la suite de la description, on considérera à titre non limitatif que la direction longitudinale L est sensiblement parallèle à la direction longitudinale du véhicule, et elle est orientée de l'arrière vers l'avant, ce qui correspond à une orientation de la droite vers la gauche, en considérant les figures 1 et 2.

Le siège 10 comporte un élément de dossier 12 et un élément d'assise 14.

L'élément d'assise 14 comporte un coussin principal 16 et un coussin mobile 18.

Le coussin principal 16 a ici la forme d'un bloc globalement parallélépipédique comportant, à son extrémité longitudinale arrière, un bord transversal arrière 20 qui est sensiblement adjacent au bord transversal d'extrémité inférieure 22 de l'élément de dossier 12,

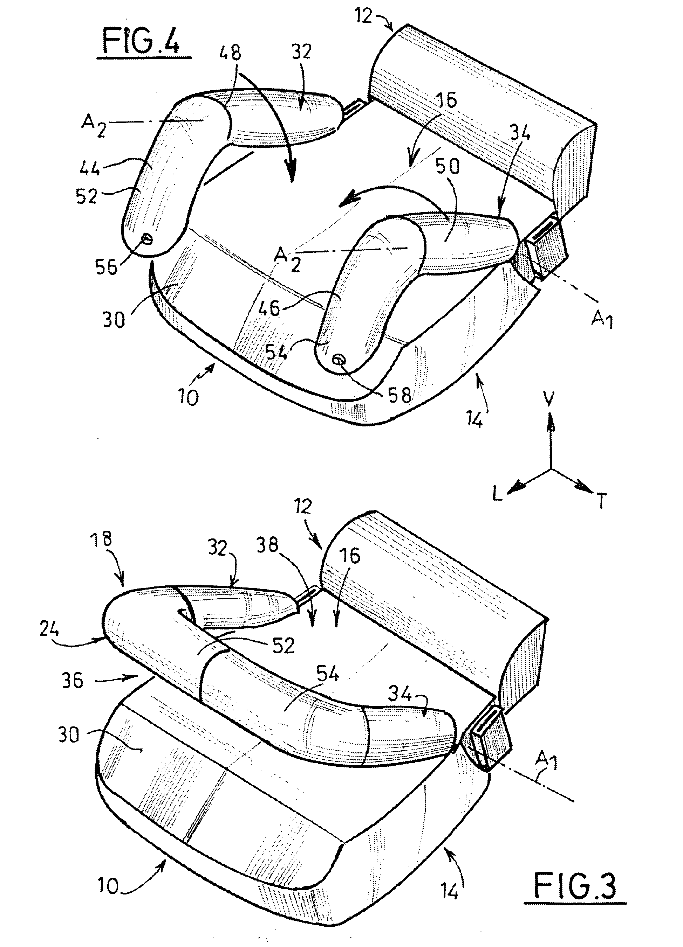

Le coussin mobile 18 est monté pivotant autour d'un axe principal A1 sensiblement transversal et horizontal entre une première position, dite adulte, qui est représentée sur les figures 1 et 2, dans laquelle le siège 10 est apte à recevoir un passager adulte, et une seconde position, dite enfant, qui est représentée sur les figures 3 et 4, dans laquelle le siège 10 est apte à recevoir un passager enfant.

Selon le mode de réalisation représenté ici, l'axe principal de pivotement A1 est agencé au voisinage du bord transversal inférieur 22 de l'élément de dossier 12.

En position adulte, le coussin mobile 18 comporte une portion avant dite nez d'assise 24 qui constitue une portion d'extrémité longitudinale avant de la surface d'assise de l'élément d'assise 14.

En position adulte, le nez d'assise 24 comporte une face supérieure globalement horizontale constituant une surface d'assise 26 et une face arrière globalement transversale dite d'appui 28 qui est sensiblement adjacente à une face avant globalement transversale 30 du coussin principal 16.

La face avant 30 du coussin principal 16 est constituée ici par une surface transversale qui est inclinée par rapport à un plan horizontal et qui est orientée globalement vers l'avant et vers le haut.

De préférence, en position adulte, la face d'appui 28 du nez d'assise 24 est sensiblement complémentaire de la face avant 30 du coussin principal 16,

En position enfant, le nez d'assise 24 occupe une position escamotée dans laquelle il est dégagé de la face avant du coussin principal 16, de manière à raccourcir la longueur de la surface d'assise de l'élément d'assise 14 en vue d'adapter le siège 10 à la morphologie d'un passager enfant.

Conformément aux enseignements de l'invention, le nez d'assise 24 est relié à l'axe principal de pivotement A1 par au moins un bras latéral 32, 34 qui, en position adulte, forme une partie latérale sensiblement longitudinale de l'élément d'assise 14. Chaque bras latéral 32, 34 s'étend alors le long du coussin principal 16.

Selon une autre caractéristique de l'invention, en position enfant, le nez d'assise 24 occupe une position escamotée dans laquelle chaque bras latéral 32, 34 s'étend globalement au-dessus du niveau du coussin principal 16, de manière à constituer un élément de retenue ou d'appui du passager enfant.

Avantageusement, le nez d'assise 24 est susceptible d'occuper une position d'arceau de sécurité, qui est représentée sur la figure 3, dans laquelle le nez d'assise 24 s'étend globalement au-dessus du coussin principal 16 et en avant de l'élément de dossier 12, de manière à constituer un appui et un élément de retenue longitudinale du passager enfant.

Avantageusement, chaque extrémité transversale 40, 42 du nez d'assise 24 est reliée à l'axe principal de pivotement A1 par un bras latéral 32, 34 de manière que, en position d'arceau de sécurité, le nez d'assise 24 et les deux bras latéraux 32, 34 constituent un arceau de sécurité fermé en forme de U.

En position adulte, les deux bras latéraux 32, 34 s'étendent longitudinalement de part et d'autre du coussin principal 16.

De préférence, chaque bras latéral 32, 34 est conformé en une portion latérale du coussin mobile 18 qui, en position adulte, constitue une portion latérale longitudinale de l'élément d'assise 14.

Le passage de la position adulte à la position d'arceau de sécurité se fait ici par un pivotement, autour de l'axe principal A1, dans le sens horaire en considérant la figure 2.

Pour que le nez d'assise 24 puisse exercer sa fonction de retenue longitudinale, il est nécessaire que le coussin mobile 18 pivote d'un angle α suffisant pour délimiter, entre le nez d'assise 24 et le coussin principal 16, un premier espace 36 pour les jambes du passager enfant, et pour délimiter, entre le nez d'assise 24 et l'élément de dossier 12, un second espace 38 pour le buste du passager enfant.

L'angle de pivotement α du nez d'assise 24 est compris, par exemple, entre vingt degrés et quatre-vingt dix degrés.

De préférence, le nez d'assise 24 est réalisé en deux tronçons transversaux 44, 46 qui sont susceptibles de se désolidariser l'un de l'autre et qui sont sensiblement symétriques par rapport à un plan longitudinal vertical.

Chaque tronçon transversal 44, 46 du nez d'assise 24 est monté à pivotement par rapport au coussin principal 16 et par rapport au bras latéral 32, 34 associé, autour d'un axe secondaire A2 sensiblement orthogonal à l'axe principal de pivotement A1, entre une position transversale d'arceau, qui est représentée sur les figures 1 et 3, et une position longitudinale d'accoudoir, qui est représentée sur la figure 4, dans laquelle le tronçon 44, 46 et le bras latéral associé 32, 34 sont contenus globalement dans un plan perpendiculaire à l'axe principal de pivotement A1.

Selon le mode de réalisation représenté ici, chaque tronçon transversal 44, 46 du nez d'assise 24 est monté pivotant à l'extrémité, libre 48, 50 du bras latéral associé 32, 34 opposée à l'axe principal de pivotement A1.

A partir de la position d'arceau, les tronçons transversaux 44, 46 du nez d'assise 24 sont prévus ici pour pivoter d'environ un quart de tour, autour de leurs axes secondaires A2, vers l'avant et vers le côté associé du siège 10, jusqu'à la position d'accoudoir, telle que représentée sur la figure 4. Les sens de pivotement des deux tronçons transversaux 44, 46 sont donc inversés l'un par rapport à l'autre.

Bien entendu, en position d'accoudoir, il est possible de modifier l'angle de pivotement α de chaque bras latéral 32, 34 autour de l'axe principal A1, en vue d'ajuster la position angulaire du bras latéral 32, 34 et du tronçon transversal 44, 46 associé à la morphologie du passager enfant.

La position d'accoudoir permet de créer des appuis et maintiens latéraux du bassin de l'enfant

De plus, les bras latéraux 32, 34 peuvent comporter des moyens de guidage (non représentés) de la sangle ventrale appartenant à la ceinture de sécurité (non représentée) équipant le siège 10, de manière que la sangle ventrale soit parfaitement adaptée à la morphologie de l'enfant,

De préférence, les extrémités transversales en vis-à-vis 52, 54 des tronçons transversaux 44, 46 du nez d'assise 24 comportent des moyens d'emboîtement complémentaires 56, 58 qui permettent de solidariser les tronçons transversaux 44, 46 en position d'arceau et en position adulte.

En position enfant, le coussin mobile 18 est donc susceptible de se présenter soit selon une configuration avec arceau de sécurité, soit selon une configuration avec accoudoirs.

Selon le présent mode de réalisation, le coussin mobile 18 passe d'abord de la position adulte à la configuration avec arceau de sécurité de la position enfant, puis il passe de la configuration avec arceau de sécurité à la configuration avec accoudoirs de la position enfant. Le mobile 18 est replacé dans la position adulte en effectuant ces opérations en sens inverse.

Selon une variante de réalisation (non représentée) de l'invention, chaque tronçon transversal 44, 46 peut occuper, autour de l'axe secondaire A2, une position angulaire sensiblement verticale de support, dans laquelle le tronçon transversal 44, 46 et le bras latéral associé 32, 34 sont contenus globalement dans un plan perpendiculaire à l'axe principal de pivotement A1, et dans laquelle les tronçons transversaux 44, 46 constituent deux pieds de support pour un élément rapporté tel qu'une tablette, ou un autre accessoire tel qu'un écran vidéo.

Lorsque les tronçons transversaux 44, 46 occupent leur position angulaire de support, les bras latéraux 32, 34 peuvent rester dans la position angulaire qu'ils occupent en position adulte, le long du coussin principal 16.

## Revendications

1. Siège (10) de véhicule automobile comportant un élément de dossier (12) et un élément d'assise (14), du type dans lequel l'élément d'assise (14) comporte un coussin principal (16) qui est sensiblement adjacent à l'élément de dossier (12) et un coussin mobile (18) qui est monté pivotant par rapport au coussin principal (16), autour d'un axe principal transversal (A1), entre une position, dite adulte, dans laquelle le siège (10) est apte à recevoir un passager adulte et une position, dite enfant, dans laquelle le siège (10) est apte à recevoir un passager enfant, du type dans lequel le coussin mobile (18) comporte une portion avant, dite nez d'assise (24), qui, en position adulte, est sensiblement adjacente à la face avant (30) du coussin principal (16) et constitue une portion avant de la surface d'assise de l'élément d'assise (14) et qui, en position enfant, est éloignée de la face avant (30) du coussin principal (16), de manière à provoquer un raccourcissement de la longueur de la surface d'assise,
**caractérisé en ce que** le nez d'assise (24) est relié à l'axe principal de pivotement (A1) par l'intermédiaire d'au moins un bras latéral (32, 34) qui, en position adulte, forme une partie latérale, sensiblement longitudinale, de l'élément d'assise (14), et **en ce que**, en position enfant, le nez d'assise (24) occupe une position escamotée dans laquelle le bras latéral (32, 34) s'étend globalement au-dessus du niveau du coussin principal (16), de manière à constituer un élément de retenue ou d'appui du passager enfant.

2. Siège (10) selon la revendication précédente, **caractérisé en ce que**, en position enfant, le nez d'assise (24) est susceptible d'occuper une position d'arceau de sécurité dans laquelle le nez d'assise (24) s'étend globalement au-dessus du coussin principal (16) et en avant de l'élément de dossier (12), de manière à constituer un élément de retenue longitudinale du passager enfant.

3. Siège (10) selon la revendication précédente, **caractérisé en ce que** chaque extrémité transversale (40, 42) du nez d'assise (24) est reliée à l'axe principal de pivotement (A1) par un bras latéral (32, 34) de manière que, en position d'arceau de sécurité, le nez d'assise (24) et les deux bras latéraux (32, 34) constituent un arceau de sécurité fermé en forme de U.

4. Siège (10) se!on l'une quelconque des revendications précédentes, **caractérisé en ce que** le nez d'assise (24) est réalisé en deux tronçons transversaux (44, 46) qui sont susceptibles de se désolidariser l'un de l'autre, et **en ce que** chaque tronçon transversal (44, 46) du nez d'assise (24) est monté à pivotement par rapport au bras latéral associé (32, 34), autour d'un axe secondaire (A2) sensiblement orthogonal à l'axe principal de pivotement (A1).

5. Siège (10) selon la revendication précédente, **caractérisé en ce que**, en position enfant, chaque tronçon transversal (44, 46) est susceptible d'occuper, autour de l'axe secondaire (A2), une position angulaire sensiblement longitudinale d'accoudoir dans laquelle le tronçon (44, 46) et le bras latéral associé (32, 34) sont contenus globalement dans un plan perpendiculaire à l'axe principal de pivotement (A1).

6. Siège (10) selon la revendication 4 ou 5, **caractérisé en ce que** chaque tronçon transversal (44, 46) est susceptible d'occuper, autour de l'axe secondaire (A2), une position angulaire sensiblement verticale de support dans laquelle le tronçon (44, 46) et le bras latéral associé (32, 34) sont contenus globalement dans un plan perpendiculaire à l'axe principal de pivotement (A1) et dans laquelle les tronçons transversaux (44, 46) constituent deux pieds de support pour un élément rapporté tel qu'une tablette.

7. Siège (10) selon l'une quelconque des revendications 4 à 6, **caractérisé en ce que** chaque tronçon transversal (44, 46) du nez d'assise (24) est monté pivotant à l'extrémité libre (48, 50) du bras latéral associé (32, 34) opposée à l'axe principal de pivotement (A1).

8. Siège (10) selon l'une quelconque des revendications 4 à 7, **caractérisé en ce que** les extrémités transversales (52, 54) en vis-à-vis des tronçons transversaux (44, 46) du nez d'assise (24) comportent des moyens d'emboîtement complémentaires (56, 58) pour solidariser les tronçons transversaux (44, 46).

9. Siège (10) selon l'une quelconque des revendications précédentes, **caractérisé en ce que** l'axe principal de pivotement (A1) est agencé au voisinage de l'élément de dossier (12).

10. Siège (10) selon l'une quelconque des revendications précédentes, **caractérisé en ce que** la face avant (30) du coussin principal (16) est constituée par une surface transversale qui est inclinée par rapport à un plan horizontal et qui est orientée globalement vers l'avant et vers le haut, et **en ce que** le nez d'assise (24) comporte une face, dite d'appui (28), qui, en position adulte, est sensiblement complémentaire de la face avant (30) du coussin principal (16) et qui est adjacente à la face avant (30) du coussin principal (16).

11. Siège (10) selon l'une quelconque des revendications précédentes, **caractérisé en ce qu**'au moins un bras latéral (32, 34) est muni de moyens pour le guidage de la sangle ventrale appartenant à une ceinture de sécurité équipant le siège (10).

## Claims

1. Motor-vehicle seat (10) that includes a back component (12) and a seat component (14), of the type in which the seat component (14) includes a main cushion (16), substantially adjacent to the back component (12), and a moveable cushion (18), pivotably mounted with respect to the main cushion (16) about a transverse main axis (A1) between an "adult" position, in which the seat (10) can receive an adult passenger, and a "child" position, in which the seat (10) can receive a child passenger, of the type in which the moveable cushion (18) includes a front "seat nose" portion (24), which, in the adult position, is substantially adjacent to the front face (30) of the main cushion (16) and forms a front portion of the seat surface of the seat component (14), and which, in the child position, is distanced from the front face (30) of the main cushion (16) so as to shorten the length of the seat surface,
**characterized in that** the seat nose (24) is connected to the main pivoting axis (A1) by means of at least one lateral arm (32, 34), which, in the adult position, forms a substantially longitudinal lateral part of the seat component (14), and **in that**, in the child position, the seat nose (24) occupies a retracted position, in which the lateral arm (32, 34) extends globally above the level of the main cushion (16) so as to form an element for retaining or supporting the child passenger.

2. Seat (10) according to the preceding claim, **characterized in that**, in the child position, the seat nose (24) is capable of occupying a safety arch position in which the seat nose (24) extends globally above the main cushion (16) and in front of the back component (12), so as to form a longitudinal element for retaining the child passenger.

3. Seat (10) according to the preceding claim, **characterized in that** each transverse end (40, 42) of the seat nose (24) is connected to the main pivoting axis (A1) by a lateral arm (32, 34) such that, in the safety arch position, the seat nose (24) and the two lateral arms (32, 34) form a closed safety arch in the form of a U.

4. Seat (10) according to any one of the preceding claims, **characterized in that** the seat nose (24) is produced in the form of two transverse sections (44, 46) capable of being detached from one another, and **in that** each transverse section (44, 46) of the seat nose (24) is mounted pivotably with respect to the associated lateral arm (32, 34) about a secondary axis (A2) substantially orthogonal to the main pivoting axis (A1).

5. Seat (10) according to the preceding claim, **characterized in that**, in the child position, each transverse section (44, 46) is capable of occupying, about the secondary axis (A2), a substantially longitudinal angular arm-rest position in which the section (44, 46) and the associated lateral arm (32, 34) are globally contained in a plane perpendicular to the main pivoting axis (A1).

6. Seat (10) according to Claim 4 or 5, **characterized in that** each transverse section (44, 46) is capable of occupying, about the secondary axis (A2), a substantially vertical angular support position in which the section (44, 46) and the associated lateral arm (32, 34) are globally contained in a plane perpendicular to the main pivoting axis (A1) and in which the transverse sections (44, 46) form two support legs for an attached component, such as a table.

7. Seat (10) according to any one of Claims 4 to 6, **characterized in that** each transverse section (44, 46) of the seat nose (24) is mounted pivotably at the free end (48, 50) of the associated lateral arm (32, 34) opposite the main pivoting axis (A1).

8. Seat (10) according to any one of Claims 4 to 7, **characterized in that** the transverse ends (52, 54) opposite the transverse sections (44, 46) of the seat nose (24) include complementary nesting means (56, 58) for securing the transverse sections (44, 46).

9. Seat (10) according to any one of the preceding claims, **characterized in that** the main pivoting axis (A1) is arranged in the vicinity of the back component (12).

10. Seat (10) according to any one of the preceding claims, **characterized in that** the front face (30) of the main cushion (16) consists of a transverse surface that is tilted relative to a horizontal plane and is globally oriented forwards and upwards, and **in that** the seat nose (24) includes a "support" face (28), which, in the adult position, substantially complements the front face (30) of the main cushion (16) and is adjacent to the front face (30) of the main cushion (16).

11. Seat (10) according to any one of the preceding claims, **characterized in that** at least one lateral arm (32, 34) is provided with means for guiding the lap belt part belonging to a seat belt with which the seat (10) is equipped.

## Patentansprüche

1. Sitz (10) für ein Kraftfahrzeug mit einem Rückenlehnenelement (12) und einem Sitzelement (14) jener Art, bei der das Sitzelement (14) ein Hauptkissen (16), das im Wesentlichen neben dem Rückenlehnenelement (12) liegt, und ein bewegliches Kissen (18), das bezüglich des Hauptkissens (16) um eine in Querrichtung verlaufende Hauptachse (A1) zwischen einer so genannten Erwachsenenstellung, in der der Sitz (10) einen erwachsenen Insassen aufnehmen kann, und einer so genannten Kindstellung, in der der Sitz (10) einen Kind-Insassen aufnehmen kann, schwenkbar montiert ist, aufweist, jener Art, bei der das bewegliche Kissen (18) einen Vorderteil, den so genannten Sitzvorsprung (24) aufweist, der in Erwachsenenstellung im Wesentlichen neben der Vorderseite (30) des Hauptkissens (16) liegt und einen Vorderteil der Sitzfläche des Sitzelements (14) bildet und in Kindstellung von der Vorderseite (30) des Hauptkissens (16) entfernt ist, um eine Verkürzung der Länge der Sitzfläche zu bewirken,
**dadurch gekennzeichnet, dass** der Sitzvorsprung (24) mittels mindestens eines Seitenarms (32, 34), der in Erwachsenenstellung einen im Wesentlichen länglichen Seitenteil des Sitzelements (14) bildet, mit der Hauptschwenkachse (A1) verbunden ist, und dass der Sitzvorsprung (24) in Kindstellung eine ausgelenkte Stellung einnimmt, in der sich der Seitenarm (32, 34) allgemein über die Höhe des Hauptkissens (16) hinaus erstreckt, um ein Halte- oder Stützelement für den Kind-Insassen zu bilden.

2. Sitz (10) nach dem vorhergehenden Anspruch, **dadurch gekennzeichnet, dass** der Sitzvorsprung (24) in Kindstellung im Wesentlichen eine Sicherheitsbügelstellung einnehmen kann, in der sich der Sitzvorsprung (24) allgemein über dem Hauptkissen (16) und vor dem Rückenlehnenelement (12) erstreckt, um ein Längshalteelement für den Kind-Insassen zu bilden.

3. Sitz (10) nach dem vorhergehenden Anspruch, **dadurch gekennzeichnet, dass** jedes Querende (40, 42) des Sitzvorsprungs (24) durch einen Seitenarm (32, 34) mit der Hauptschwenkachse (A1) verbunden ist, damit in Sicherheitsbügelstellung der Sitzvorsprung (24) und die beiden Seitenarme (32, 34) einen U-förmigen geschlossenen Sicherheitsbügel bilden.

4. Sitz (10) nach einem der vorhergehenden Ansprüche, **dadurch gekennzeichnet, dass** der Sitzvorsprung (24) aus zwei Querabschnitten (44, 46) hergestellt ist, die voneinander getrennt werden können, und dass jeder Querabschnitt (44, 46) des Sitzvorsprungs (24) bezüglich des zugehörigen Seitenarms (32, 34) um eine im Wesentlichen orthogonal zur Schwenkhauptachse (A1) verlaufende Sekundärachse (A2) schwenkbar angebracht ist.

5. Sitz (10) nach dem vorhergehenden Anspruch, **dadurch gekennzeichnet, dass** in Kindstellung jeder Querabschnitt (44, 46) um die Sekundärachse (A2) herum eine im Wesentlichen in Längsrichtung verlaufende Armlehnenwinkelstellung einnehmen kann, in der der Abschnitt (44, 46) und der zugehörige Seitenarm (32, 34) allgemein in einer senkrecht zur Hauptschwenkachse (A1) verlaufenden Ebene enthalten sind.

6. Sitz (10) nach Anspruch 4 oder 5, **dadurch gekennzeichnet, dass** jeder Querabschnitt (44, 46) um die Sekundärachse (A2) eine im Wesentlichen vertikale Stützwinkelstellung einnehmen kann, in der der Abschnitt (44, 46) und der zugehörige Seitenarm (32, 34) allgemein in einer senkrecht zur Hauptschwenkachse (A1) verlaufenden Ebene enthalten sind und in der die Querabschnitte (44, 46) zwei Stützfüße für ein angebrachtes Element, wie zum Beispiel eine Ablage, bilden.

7. Sitz (10) nach einem der Ansprüche 4 bis 6, **dadurch gekennzeichnet, dass** jeder Querabschnitt (44, 46) des Sitzvorsprungs (24) am freien Ende (48, 50) des zugehörigen Seitenarms (32, 34) gegenüber der Schwenkhauptachse (A1) schwenkbar montiert ist.

8. Sitz (10) nach einem der Ansprüche 4 bis 7, **dadurch gekennzeichnet, dass** die Querenden (52, 54) gegenüber den Querabschnitten (44, 46) des Sitzvorsprungs (24) komplementäre Eingreifmittel (56, 58) aufweisen, um die Querabschnitte (44, 46) fest zu verbinden.

9. Sitz (10) nach einem der vorhergehenden Ansprüche, **dadurch gekennzeichnet, dass** die Hauptschwenkachse (A1) in der Nähe des Rückenlehnenelements (12) angeordnet ist.

10. Sitz (10) nach einem der vorhergehenden Ansprüche, **dadurch gekennzeichnet, dass** die Vorderseite (30) des Hauptkissens (16) aus einer Querfläche besteht, die bezüglich einer horizontalen Ebene geneigt und allgemein nach vorne und nach oben ausgerichtet ist, und dass der Sitzvorsprung (24) eine so genannte Stütz-Fläche (28) aufweist, die in Erwachsenenstellung im Wesentlichen komplementär zur Vorderseite (30) des Hauptkissens (16) verlauft und sich neben der Vorderseite (30) des Hauptkissens (16) befindet.

11. Sitz (10) nach einem der vorhergehenden Ansprüche, **dadurch gekennzeichnet, dass** mindestens ein Seitenarm (32, 34) mit Mitteln zur Führung des zu einem am Sitz (10) vorgesehenen Sicherheitsgurt gehörenden Beckengurts versehen ist.
